# EUROPÄISCHE PATENTSCHRIFT

(11) **EP 3 450 324 B1**
(45) Veröffentlichungstag und Bekanntmachung des Hinweises auf die Patenterteilung: **17.01.2024**
(21) Anmeldenummer: 18185379.7
(22) Anmeldetag: 25.07.2018
(51) Int. Cl.: B64F 1/32, B60T 7/12, B60K 31/00, B60T 7/22, B64F 1/36

(54) **VERFAHREN ZUM STEUERN DER BEWEGUNG EINES FLUGHAFEN-VORFELD-FAHRZEUGES SOWIE ENTSPRECHENDES VORFELD-FAHRZEUG**
METHOD FOR CONTROLLING THE MOVEMENT OF AN AIRPORT APRON VEHICLE AND CORRESPONDING APRON VEHICLE
PROCÉDÉ DE COMMANDE DU MOUVEMENT D'UN VÉHICULE DE PISTE D'AÉROPORT AINSI QUE VÉHICULE DE PISTE CORRESPONDANT

(30) Priorität: 21.08.2017 DE 102017119003
(43) Veröffentlichungstag der Anmeldung: 06.03.2019
(73) Patentinhaber: MULAG FAHRZEUGWERK Heinz Wössner GmbH & CO. KG, 77728 Oppenau (DE)
(72) Erfinder: Meißner, Uwe, 77876 Kappelrodeck (DE)
(74) Vertreter: Weickmann & Weickmann PartmbB

(56) Entgegenhaltungen:
- EP-A2- 2 433 870
- DE-A1-102011 101 418
- DE-A1-102013 106 347

## Beschreibung

### I. Anwendungsgebiet

Die Erfindung betrifft sogenannte Vorfeld-Fahrzeuge, worunter man alle Fahrzeuge versteht, die - abgesehen von den Flugzeugen selbst - auf den Flächen des Flughafens, auf denen auch die Flugzeuge fahren und parken, gefahren werden, egal ob selbstangetrieben oder gezogen/geschoben.

Solche sogenannten Vorfeld-Fahrzeuge sind beispielsweise Fahrzeuge, auf denen ein Förderband montiert ist, um Gepäck aus der Ladeluke eines Flugzeuges zu entladen oder umgekehrt auf diesem Weg das Flugzeug zu beladen, oder auch fahrbare Treppen zum Ein- und Aussteigen von Passagieren oder fahrbare Lade-Plattformen für Ladungs-Container, Catering-Container und ähnliches.

Dabei besitzen diese Vorfeld-Fahrzeuge unterschiedliche Aufbauten, oft auch mit beweglichen Aufbau-Elementen, die gegenüber dem Rest des Aufbaus und damit insbesondere gegenüber dem Chassis des Vorfeld-Fahrzeugs bewegbar sind, entweder ausfahrbar sind oder anhebbar und absenkbar sind, wie das vordere Ende eines Förderbandes eines Förderband-Fahrzeuges oder die gesamte Ladeplattform.

### II. Technischer Hintergrund

Da Flugzeuge aufgrund der Leichtbauweise mechanisch von außen leicht beschädigt werden können, muss beim Positionieren dieser Vorfeld-Fahrzeuge nahe am Flugzeug unbedingt ein Anfahren dieser Fahrzeuge am Flugzeug vermieden werden, insbesondere soll die Außenhaut des Flugzeuges überhaupt nicht berührt werden, sondern das dem Flugzeug nächstkommende Element des Aufbaus auch in der Endstellung einen minimalen Abstand zum Flugzeug einhalten.

Aus diesem Grund ist es bekannt, die Annäherung des Vorfeld-Fahrzeugs an das Flugzeug mittels an dem Fahrzeug vorhandener Abstands-Sensoren zu überwachen und die Annäherung so zu steuern, dass dies vermieden wird.

Dabei ist es auch bereits bekannt, die Annäherungsgeschwindigkeit, insbesondere die Fahr-Geschwindigkeit des sich an das stehende Flugzeug annähernden Vorfeld-Fahrzeuges ein- oder mehrfach in Stufen auf niedrigere Geschwindigkeit zu reduzieren, insbesondere automatisch zu reduzieren, sobald beim Annähern das Unterschreiten eines bestimmten Abstands-Grenzwertes festgestellt wird.

Bei Erreichen oder Unterschreiten eines letzten, geringsten, Abstands-Grenzwertes wird dann die Annäherungsbewegung des Vorfeld-Fahrzeuges beendet und dieses zum Stillstand gebracht.

Hierfür kann die Steuerung automatisch in die Steuerung des Fahr-Antriebes eingreifen.

Das Problem einer Kollision zwischen Vorfeld-Fahrzeug und Flugzeug besteht jedoch nicht nur beim Heranfahren des Vorfeld-Fahrzeuges mittels dessen Fahrantriebes an das Flugzeug, sondern auch dann, wenn im Stillstand des Chassis des Vorfeld-Fahrzeuges ein bewegliches Aufbau-Element gegen das Flugzeug angenähert wird, beispielsweise das Gepäck-Förderband eines Förderband-Fahrzeuges angehoben wird, um die Unterkante der Ladeluke des Flugzeuges zu erreichen.

Auch dabei kann bei nicht korrekter Positionierung und Bewegung des Förderbandes ein Teil des Förderbandes - sei es dessen Tragstruktur oder ein seitliches Führungsgeländer etc. - die Unterseite des Flugzeuges unterhalb der Ladeluke unzulässigerweise kontaktieren.

Auch Kollisionen mit von oben herabhängenden Teilen des Flugzeuges wie etwa Triebwerken unter der Tragfläche sind möglich, wenn ein solches Vorfeld-Fahrzeug unter einem Flugzeug hindurchfährt, was offiziell nicht erlaubt ist, aber in der Praxis dennoch gelegentlich geschieht.

Ein Verfahren mit den Merkmalen des Oberbegriffs von Anspruch 1 sowie ein entsprechendes Vorfeld-Fahrzeug ist bekannt z.B. aus EP 2433870 A2, DE 102013106347 A1 und DE 102011101418 A1

Dabei hat sich herausgestellt, dass das bekannte Herabsetzen der Fahrgeschwindigkeit des Vorfeld-Fahrzeuges abhängig vom detektierten Abstand zum Flugzeug noch nicht die optimale Lösung darstellt, um das Vorfeld-Fahrzeug so effizient und damit so schnell wie möglich in die Arbeitsposition am Flugzeug zu bringen, ohne durch zu schnelles Annähern das Kollisionsrisiko zu erhöhen.

### III. Darstellung der Erfindung

### a) Technische Aufgabe

Es ist daher die Aufgabe gemäß der Erfindung, ein Verfahren zum Steuern der Annäherung eines Vorfeld-Fahrzeuges an ein Flugzeug, sowie ein dafür geeignetes Vorfeld-Fahrzeug zur Verfügung zu stellen, welches eine schnelle und dennoch sichere Annäherung an das Flugzeug, bis auf den gewünschten Endabstand in der Arbeitsposition ermöglicht.

### b) Lösung der Aufgabe

Diese Aufgabe wird durch die Merkmale der unabhängigen Ansprüche 1 und 8 gelöst

Vorteilhafte Ausführungsformen ergeben sich aus den Unteransprüchen.

Die bekannte stufenweise Reduzierung der Annäherungsgeschwindigkeit des Vorfeld-Fahrzeuges beim Annähern an das Flugzeug wird zumindest in der Endphase ersetzt durch eine kontinuierliche Reduzierung der Annäherungs-geschwindigkeit.

Dies ermöglicht eine schnellere Annäherung bis auf Endposition, also Arbeitsposition, als die stufenweise Reduzierung der Annäherungsgeschwindigkeit, da bei einer solchen stufenweisen Reduzierung über einen bestimmten Abstandsbereich die Annäherungsgeschwindigkeit konstant bleibt, und deshalb so gewählt werden muss, dass sie auch für den Minimalwert dieses Abstandsbereiches noch nicht zu hoch ist. Für den Maximalwert dieses Abstandsbereiches, in dem die Annäherungsgeschwindigkeit dann etwas größer hätte sein können, wird somit Zeit verloren.

Dabei sei klargestellt, dass die Annäherungsgeschwindigkeit
- entweder die Fahrgeschwindigkeit des Fahrzeuges auf dem Untergrund umfassen kann, insbesondere deren Komponente in Richtung Flugzeug sein kann,
- oder die Annäherungsgeschwindigkeit allein die Bewegungsgeschwindigkeit eines beweglichen Elementes des insbesondere stillstehenden Fahrzeuges zum Rest des Fahrzeuges umfassen kann, insbesondere deren Komponente in Richtung Flugzeug sein kann,
- oder die Annäherungsgeschwindigkeit eine Kombination aus beiden sein kann.

Vorzugsweise werden sowohl die Fahrgeschwindigkeit des Fahrzeuges als auch die Bewegungsgeschwindigkeit des beweglichen Elementes im Rahmen der vorliegenden Anmeldung von der Warnvorrichtung berücksichtigt, insbesondere die sich daraus in Summe ergebende absolute Annäherung des Fahrzeuges an das Flugzeug.

Obwohl der Begriff "Annäherungsgeschwindigkeit" die relative Annäherung des Vorfeld-Fahrzeuges an das Flugzeug bedeutet, wird in der vorliegenden Anmeldung hierbei immer davon ausgegangen, dass das Flugzeug dabei still steht, somit die Annäherungsgeschwindigkeit der Fahr-Geschwindigkeit des Vorfeld-Fahrzeuges und/oder der Bewegungsgeschwindigkeit dessen beweglichen Aufbau-Elementes, insbesondere deren Komponenten in Richtung Flugzeug, entspricht.

Dabei gibt es mehrere verschiedene Methoden, mit denen kontinuierlich die Annäherungsgeschwindigkeit reduziert werden kann:
Eine erste, nicht unter die Erfindung fallende Methode besteht darin, ab dem Unterschreiten eines Reduzierungs-Abstandes das Abbremsen der Annäherungsgeschwindigkeit um einen konstanten Wert, also mit einer konstanten negativen Beschleunigung, erfolgen zu lassen.

Dies ist in vielen Fällen ausreichend, da die Höchstgeschwindigkeit solcher Vorfeld-Fahrzeuge, welche dieses Fahrzeug somit bei Unterschreiten des Mindest-Abstandes besitzen kann, generell für Vorfeld-Fahrzeuge - gegebenenfalls unterschiedlich je nach Art des Vorfeld-Fahrzeuges - auf eine zwar nicht immer gleiche aber doch auf eine insgesamt relativ niedrige maximale Fahr-geschwindigkeit begrenzt ist.

Da dies nicht unbedingt auch eine technische Begrenzung sein muss, sondern häufig auch lediglich eine Vorschrift darstellt, die manuell vom Fahrer des Vorfeld-Fahrzeuges eingehalten werden sollte, ist dies jedoch keine sichere Ausgangssituation.

Diese Methode funktioniert jedoch auch ohne gleichzeitiges Überwachen der Annäherungsgeschwindigkeit, obwohl ohnehin die Steuerung der Annäherungsgeschwindigkeit beeinflusst werden soll, abhängig vom dem ermittelten aktuellen Abstand zum Flugzeug.

Erfindungsgemäß wird die Annäherungsgeschwindigkeit ständig gemessen und mit einer Maximalgeschwindigkeit verglichen, die in Abhängigkeit vom Abstand oder einem Abstands-Bereich zwischen Vorfeld-Fahrzeug und Flugzeug festgelegt ist.

Liegt die aktuell gemessene Annäherungsgeschwindigkeit über der für diesen Abstand oder Abstands-Bereich zugelassenen Maximal-Geschwindigkeit, wird die Annäherungsgeschwindigkeit so abgebremst, dass sie diese Maximal-Geschwindigkeit nicht überschreitet, insbesondere eine unterhalb dieser Maximal-Geschwindigkeit festgelegte Soll-Geschwindigkeit einhält.

Insbesondere ist dabei die beim Abbremsen verwendete negative Beschleunigung auf einen vorgegebenen Höchstwert begrenzt.

Auf diese Art und Weise wird erreicht, dass durch dieses kontinuierliche Abbremsen bei jedem Abstand die für diesen Abstand gerade noch zulässige Maximal-Annäherungsgeschwindigkeit ausgenutzt werden kann und dadurch das Heranfahren des Vorfeld-Fahrzeuges bis auf Arbeitsposition optimal schnell von statten geht.

Dennoch können aus bestimmten Gründen - beispielsweise zur Reduzierung des Steuerungsaufwandes - vor dem Beginn der Phase des kontinuierlichen Abbremsens ein oder mehrfache stufenweise Reduzierungen der Annäherungsgeschwindigkeit, wie aus dem Stand der Technik grundsätzlich bekannt, vorgeschaltet sein. Diese Maßnahme kann beispielsweise dazu führen, dass die für das Vorfeld festgelegte Maximal-Geschwindigkeit auf einen höheren Wert gesetzt werden kann, was insgesamt die Vorgänge auf dem Vorfeld eines Flughafens beschleunigt.

In einer bevorzugten Ausführungsform der Erfindung wird nicht nur die Annäherungsgeschwindigkeit detektiert, sondern auch die Richtung der Annäherungsgeschwindigkeit, also in der sich das Vorfeld-Fahrzeug an das Flugzeug annähert und auch die Art, wodurch das geschieht, also
- ob die Annäherung durch aktiven Fahrantrieb des gesamten Vorfeld-Fahrzeuges stattfindet
- und/oder durch den aktivierten Antrieb eines beweglichen Aufbau-Elementes, und wenn es hiervon mehrere gibt, welches der mehreren beweglichen Aufbauelemente.

Denn davon abhängig kann ein Abbremsen technisch bedingt schneller oder weniger schnell durchgeführt werden und auch der Abbremsvorgang schneller oder weniger schnell durch in Gang setzen des Abbremsens wirksam werden. Dementsprechend können für den gleichen Abstand oder Abstandsbereich unterschiedliche maximale Fahr-Geschwindigkeiten und/oder Soll-Fahr-Geschwindigkeiten und/oder maximale Bewegungs-Geschwindigkeiten und/oder Soll-Bewegungs-Geschwindigkeiten vorgegeben werden, abhängig von Richtung und Art der Annäherung.

So ist es beispielsweise vorstellbar, dass das Abbremsen des gesamten Vorfeld-Fahrzeuges, welches mehrere Tonnen wiegt, nicht so schnell erfolgen soll, wie das Abbremsen der z.B. Ausfahrbewegung eines mehrteiligen Förderbandes oder das Anheben des vorderen Endes eines Förderbandes gegenüber dem Chassis des Vorfeld-Fahrzeuges, da diese Teile ein wesentlich geringeres Gewicht besitzen. Dies ist unter anderem auch abhängig von der Art des Antriebes, beispielsweise ob es sich dabei um einen Elektromotor oder einen Hydraulik-Kolben handelt.

Generell ist jedoch meistens die Fahr-Geschwindigkeit des gesamten Fahrzeuges, selbst auf der niedrigsten Geschwindigkeitsstufe, der Schleich-Fahrt, noch größer als die Bewegungs-Geschwindigkeit eines beweglichen Teiles des Fahrzeuges wie etwa die Hub-Bewegung der Förderband-Einheit.

Deshalb wird vorzugsweise bei Erreichen eines Reduzierung-Abstandes, also eines solchen Grenzwertes des Abstandes zwischen Vorfeld-Fahrzeug und Flugzeug, bei dem eine Reduzierung der Annäherungsgeschwindigkeit durchgeführt werden soll, bei Vorliegen einer kombinierten Annäherung aus Fahr-geschwindigkeit des Fahrzeuges und Bewegungs-Geschwindigkeit eines beweglichen Elementes des Fahrzeuges nur die Fahrgeschwindigkeit reduziert.

Die Bewegungs-Geschwindigkeit des beweglichen Teiles ist häufig auch nicht steuerbar, sondern das bewegliche Teil kann still gesetzt oder mit einer vorgegebenen, festen Bewegungs-Geschwindigkeit bewegt werden.

Dann wird die Bewegungs-Geschwindigkeit des beweglichen Teiles erst bei Erreichen des Stopp-Abstandes, bei dem also die Annäherungsgeschwindigkeit auf Null gesetzt werden soll, beendet, also das bewegliche Teil still gesetzt, und ebenso der Fahrantrieb still gesetzt.

Die effizienteste und schnellste Annäherung ist somit möglich, indem die Annäherungsgeschwindigkeit entsprechend einem Abstands-GeschwindigkeitsProfil, also einer Abstands-Geschwindigkeits-Kurve, gesteuert wird, also eine zulässige Maximal-Geschwindigkeit jeweils für eine sehr große Anzahl von verschiedenen Abständen oder sehr kleinen Abstands-Bereichen, insbesondere unmittelbar benachbart festgelegte, Abstände in Form einer solchen Profilkurve festgelegt ist, wobei die Abstandswerte im Bereich von wenigen oder auch nur einem Zentimeter und bei Bedarf am Ende der Annäherungsbewegung sogar noch darunter voneinander entfernt sein können.

Zusätzlich zum Beeinflussen der Annäherungsgeschwindigkeit kann die Steuerung bei Unterschreiten des mindestens einen Reduzierungs-Abstandes und/oder des Stopp-Abstandes bzw. bei Abfahren eines Abstands-Geschwindigkeits-Profils bei Überschreiten der Geschwindigkeit gemäß diesem Profil ein Warnsignal abgeben. Das Warnsignal kann insbesondere aufrechterhalten werden, solange Grund für das Abgeben des Warnsignals besteht.

Ein solches Warnsignal kann auf unterschiedliche Art und Weise verwendet werden:
Zum einen, um in der Fahrerkabine des Vorfeld-Fahrzeuges ein sichtbares und/oder hörbares Warnsignal zu erzeugen oder auch, um ein solches sichtbares oder hörbares Warnsignal zusätzlich oder stattdessen auch außen am Vorfeld-Fahrzeug abzugeben.

Im Inneren der Fahrerkabine dient dies dazu, dem Fahrer zu vermitteln, welche Annäherung bereits erreicht ist, da er die konkrete Situation im Bereich des geringsten Abstandes je nach Vorfeld-Fahrzeug von seiner Fahrerkabine aus unter Umständen gar nicht einsehen kann.

Die Abgabe eines sichtbaren und/oder hörbaren Warnsignals auf der Außenseite dient dazu, dem Fahrer die gleiche Information zu vermitteln, falls sich dieser außerhalb der Fahrerkabine aufhält oder die entsprechende damit verbundene Information den übrigen Personen, die mit dem sich annäherndem Vorfeld-Fahrzeug nach Erreichen seiner Arbeitsposition arbeiten werden, den erreichten Zustand anzuzeigen.

Optisch kann dies wie bekannt durch unterschiedliche Farben einer Lampe, unterschiedliche Blinkfrequenzen einer solchen Lampe oder ähnliches erfolgen, akustisch durch einen Warnton, der je nach erreichtem Zustand eine bestimmte Tonhöhe annimmt und/oder ein intermittierender Ton mit einer Frequenz ist, die den Annäherungszustand wiedergibt bis hin zu einem durchgehenden Ton, der beispielsweise abgegeben wird, wenn die Endposition des Vorfeld-Fahrzeuges erreicht ist.

Die anderen beteiligten Personen können sich damit rechtzeitig auf den Beginn des Arbeitsvorganges einstellen und mit ihrer Arbeit somit unmittelbar nach Erreichen der Arbeitsposition des Vorfeld-Fahrzeuges beginnen.

Da eine Annäherung häufig nicht nur durch gerades Vorwärts- oder Rückwärtsfahren des Vorfeld-Fahrzeuges stattfindet, sondern auch durch ein Heranschwenken eines Endes des Vorfeld-Fahrzeuges bei Vorwärts- oder Rückwärtsfahren mit einem gegenüber der Geradeausfahrt vorhandenem Lenkeinschlag, wird vorzugsweise auch die Richtung, also rechts oder links, sowie der Winkel des Lenkeinschlages ständig detektiert und abhängig davon die Richtung, in welcher der Abstand gemessen wird, festgelegt und gegebenenfalls variiert.

Bei Vorhandensein mehrerer, insbesondere in unterschiedliche Richtungen gerichteter, Abstandssensoren wird der entsprechende Abstandssensor ausgewählt und insbesondere von der Steuerung aktiviert.

Dabei kann zusätzlich auch die zuvor beschriebene Art und/oder Richtung der Annäherungsgeschwindigkeit berücksichtigt werden.

Beispielsweise stellt es hinsichtlich der Annäherung einen großen Unterschied dar, ob bei einem Fahren mit Lenkeinschlag die gelenkten Räder in Fahrtrichtung gesehen die Vorderräder oder Hinterräder sind, denn wenn es sich dabei um die Hinterräder handelt, kann dies unter Umständen - abhängig von Radstand und z.B. Auskragung des dem Flugzeug zugewandten Teil des Aufbaus - eine erhebliche positive Übersetzung, also Verstärkung, der Seitwärtsbewegung dieses Teils des Vorfeld-Fahrzeuges, darstellen, die steuerungstechnisch mitberücksichtigt werden muss bei der Art der Bewertung des momentanen Abstandes und in der Folge der Reduzierung der Annäherungsgeschwindigkeit, in diesem Fall der durch das Fahren des Fahrzeuges bewirkten Schwenk-Geschwindigkeit zur Seite hin.

Vorzugsweise erfolgt die Überwachung des Abstandes zwischen Vorfeldfahrzeug und Flugzeug auch dann durch Sensoren, wenn das Vorfeld-Fahrzeug komplett still steht, also weder sein Fahr-Antrieb aktiv ist noch der Antrieb für die Bewegung eines beweglichen Teils des Fahrzeuges aktiv ist.

Denn der Abstand zum Flugzeug kann sich auch durch Bewegungen des Flugzeuges ändern, beispielsweise indem durch Ausfedern des Fahrwerks während des Ladens des Flugzeuges sich der Rumpf des Flugzeuges nach oben bewegt, oder das stehende Flugzeug beispielsweise durch relativ starken Wind bewegt wird, wodurch es auch zu leichtem Schwanken oder Drehen des Rumpfes um seine Längsachse kommen kann.

Bei einem dann festgestellten Unterschreiten eines hierfür speziell festgesetzten Mindest-Abstandes, der auch noch kleiner sein kann als der Stopp-Abstand, kann wahlweise entweder nur ein Warnsignal von der Warnvorrichtung abgegeben werden und/oder auch eine entsprechende Gegen-Bewegung, sei es des beweglichen Teils des Vorfeld-Fahrzeuges oder des Chassis des Vorfeldfahrzeuges, bewirkt werden, je nachdem durch welche Art der Gegenbewegung sich der Mindestabstand wieder überschreiten lässt.

Dies gilt insbesondere bei in die Ladeluke hinein vorwärts gefahrener Förderband-Einheit, bei der auch der Abstand zwischen den Seiten der Förderband-Einheit und den Seitenwangen der Ladeluke durch Sensoren und/oder Bumper überwacht werden sollte, selbst wenn das Fahrzeug still steht und die Förderband-Einheit relativ zum Fahrzeug ebenfalls nicht bewegt wird.

Die vorstehend genannte Aufgabe wird erfindungsgemäß gelöst hinsichtlich des Vorfeld-Fahrzeuges, welches gattungsgemäß ein - meist selbst-fahrendes - Chassis und einen auf dem Chassis montierten Aufbau, umfasst sowie Abstands-Sensoren, indem die ebenfalls vorhandene Steuerung, welche den Fahrantrieb des Vorfeld-Fahrzeuges steuert, so ausgebildet ist, dass sie zur Durchführung des vorbeschriebenen Verfahrens geeignet ist, also auch zum Durchführen eines kontinuierlichen Abbremsvorganges der Annäherungsgeschwindigkeit nach Unterschreiten eines ersten Reduzierungs-Abstandes.

Die Abstandssensoren sind in aller Regel berührungslos wirkende Abstands-Sensoren, und können auch Kameras sein, mit deren Hilfe über entsprechende optische Verfahren wie zum Beispiel das Lichtschnitt-TriangulationsVerfahren außer einer Bilddarstellung auch der konkrete Abstand der Kamera zum aufgenommenen Objekt berechnet werden kann.

Die Abstandssensoren können jedoch auch berührende Taster sein, die natürlich nur sehr geringe Abstände messen können und sollen.

Der Aufbau kann dabei auch bewegliche Aufbauelemente umfassen, die gegenüber dem Rest des Aufbaus und/oder gegenüber dem Chassis beweglich sind, beispielsweise ein höhenverstellbares Element wie etwa die Förderband-Einheit bei einem Förderband-Fahrzeug, wobei die Steuerung dann auch die Bewegung eines solchen beweglichen Aufbau-Elementes steuert.

Vorzugsweise sind die das Chassis verfahrenden Räder nicht nur antreibbar, sondern auch lenkbar und das Chassis besitzt somit eine Lenkvorrichtung. Für diesen Fall sollte auch die Lenkvorrichtung mit Winkelsensoren und/oder Richtungssensoren hinsichtlich der Größe des Lenkeinschlages und dessen Richtung bezüglich der Geradeaus-Stellung vorhanden sein, um den Lenkeinschlag bei der Steuerung der Reduzierung der Annäherungs-geschwindigkeit zu berücksichtigen.

Der wenigstens eine am Vorfeld-Fahrzeug vorhandene Abstands-Sensor - in der Regel werden dies mehrere Abstands-Sensoren sein - ist vorzugsweise an derjenigen Stelle des Vorfeld-Fahrzeuges befestigt, die bei einer regulären Annäherung an das Flugzeug den geringsten Abstand zum Flugzeug einnehmen wird.

Möchte man auch nicht-reguläre Annäherungsvorgänge gegen Kollision mit dem Flugzeug absichern, sind solche Sensoren natürlich auch an weiteren Stellen des Vorfeld-Fahrzeuges, insbesondere ringsum, in der Horizontalen gerichtet und/oder schräg nach oben sowie insbesondere lotrecht nach oben gerichtet und/oder nach unten gerichtet, insbesondere an der Unterseite des vorderen End-Bereiches der Förderband-Einheit, vorzusehen.

Vorzugsweise werden dabei auch an einer Stelle des Vorfeld-Fahrzeuges und in dieselbe Richtung weisend und gegebenenfalls auch gleiche Auslegung, z.B. Detektionswinkel und Detektionsreichweite, aufweisend, zwei Sensoren nebeneinander angeordnet um die gesamte Kollisionsschutz-vorrichtung redundant auszubilden, indem der Ausfall eines Sensors gemeldet wird, aber durch die Funktion des anderen analogen Sensors an gleicher Stelle die Kollisionsschutz-Vorrichtung dennoch funktionsfähig ist.

Für den Fall, dass durch die Kollisionsschutzvorrichtung trotz Absenken der Annäherungsgeschwindigkeit mit zunehmender Annäherung bis auf Null ein Kontakt mit dem Flugzeug dennoch nicht unterbunden werden kann - selbst wenn dieser unkritisch mit sehr geringer Kontaktierungsgeschwindigkeit stattfindet - sind zusätzlich - wie an sich bekannt - an einer oder mehreren Stellen des Aufbaus des Vorfeld-Fahrzeuges sogenannte Bumper vorgesehen. Diese Bumper dämpfen nicht nur den Aufprall, sondern weisen ein Schaltelement auf, insbesondere in Form von Schaltleisten, welche bei Kontaktierung des Flugzeuges aktiviert werden und ein Kontaktierungs-Signal an die Steuerung senden, welche daraufhin sofort die entsprechende Annäherungsgeschwindigkeit auf Null reduziert und insbesondere eine geringfügige Rückwärtsbewegung veranlasst.

Dabei kann das von dem Bumper abgegebene Signal - ebenso wie die Signale aller Abstandssensoren und weiteren Sensoren - auch in der Steuerung des Vorfeld-Fahrzeuges in einem Speicher gespeichert werden, insbesondere zusammen mit der Uhrzeit und gegebenenfalls der dabei ebenfalls gemessenen Kraft und/oder Geschwindigkeit des Aufpralls bzw. der Annäherungsgeschwindigkeit.

Vorzugsweise umfasst der Fahrantrieb des Chassis und/oder der Bewegungsantrieb des beweglichen Aufbauelementes auch Geschwindigkeits-Sensoren, die die momentane Geschwindigkeit dieses Antriebes ständig misst, wobei zusätzlich oder stattdessen auch die Richtung, in die der Antrieb das Vorfeld-Fahrzeug oder das entsprechende bewegliche Aufbauelement bewegt, detektiert wird.

Unter einem ständigen Messen/Detektieren muss nicht unbedingt das ohne zeitliche Lücke erfolgende Messen/Detektieren gemeint sein, sondern lediglich, dass eventuelle zeitliche Lücken zwischen den einzelnen Messungen so gering Wert sind, beispielsweise maximal 100 Millisekunden, dass dies im Vergleich zu der Annäherungsgeschwindigkeit und der vorgesehenen Abbremsung der Annäherungsgeschwindigkeit vernachlässigbar ist.

Ebenso soll unter dem Begriff Flugzeug auch jedes andere Luftfahrzeug wie etwa ein Hubschrauber mit verstanden werden.

Die das Vorfeld-Fahrzeug bewegenden Räder können für die Zwecke der vorliegenden Erfindung auch andere Bewegungselemente wie etwa Rollen, Ketten oder Gleiter sein.

Falls es sich bei dem Vorfeld-Fahrzeug um ein solches ohne eigenen Fahr-Antrieb handelt, ist die erfindungsgemäße Vorgehensweise dennoch möglich, indem dann zwar die entsprechenden Sensoren am Vorfeld-Fahrzeug vorhanden sind, die Steuerung, welche die Annäherungsgeschwindigkeit insbesondere des Fahr-Antriebes, beeinflusst und auch der Fahrantrieb selbst im Zug/Schubfahrzeug für das nicht angetriebene Fahrzeug untergebracht ist, wodurch zumindest eine datentechnische Verbindung zwischen gezogenem oder geschobenem Vorfeld-Fahrzeug und dessen Zug/Schub-Fahrzeug notwendig ist.

Des Weiteren kann innerhalb der Fahrerkabine und/oder auf der Außenseite des Vorfeld-Fahrzeuges ein optischer und/oder akustischer Signalgeber angeordnet sein, um ein entsprechendes, von der Steuerung veranlasstes, Signal abzugeben, um dem Fahrer oder umstehendem Personal den Annäherungszustand des Vorfeld-Fahrzeuges zu vermitteln.

Unter anderem dient dies dazu, den Fahrer auf eine drohende Kollision hinzuweisen für den Fall, dass das Stillsetzen der Bewegung nicht unmittelbar danach erfolgt.

Zusätzlich oder stattdessen kann in der Fahrerkabine eine optische Anzeige dergestalt durchgeführt werden, dass der konkrete aktuelle Abstand zwischen Vorfeld-Fahrzeug und Flugzeug angegeben wird, insbesondere bezogen auf den jeweils den Abstand mitteilenden Sensors, der vorzugsweise hinsichtlich seiner Positionierung am Vorfeld-Fahrzeug dargestellt wird.

Vorzugsweise umfasst das Vorfeld-Fahrzeug auch eine oder mehrere Kameras, die die bei regulärer Annäherung sich dem Flugzeug auf den geringsten Abstand annähernden Teile des Vorfeld-Fahrzeuges zeigen, wobei die Aufnahmen der Kameras vorzugsweise ebenfalls auf einem Display in der Fahrerkabine angezeigt werden, vorzugsweise gekoppelt mit der Angabe des konkreten momentanen Abstandes an dieser Stelle, der durch Verwendung einer speziellen Kamera und einer daran angeschlossenen Auswerte-Einheit mittels optischer Methoden aus dem von der Kamera aufgenommenen Bild bestimmt werden kann.

Als Sensoren können Ultraschall-Sensoren und/oder auf Radar basierende Sensoren und/oder kapazitive Sensoren und/oder magnetisch wirkende Sensoren und/oder die besagten speziellen Kameras, jedenfalls vorzugsweise berührungslos arbeitende Sensoren, eingesetzt sein. Bei berührenden Sensoren genügen einfache Berührungs-Taster. Die Wahl des Sensors wird vorzugsweise nach der abzutastenden maximalen Entfernung gewählt.

Vorzugsweise geben die Sensoren dabei proportionale, analoge Signale ab.

Vorzugsweise sind neben den Sensoren oder in diese integriert Lichtquellen zur Abgabe eines gerichteten Lichtes, insbesondere Lichtstrahles, installiert, die bei Aktivierung des entsprechenden Sensors vorzugsweise leuchten, was die Kontrolle der korrekten Ausrichtung der Sensoren erleichtert, die in ihrer Richtungseinstellung meist nur kraftschlüssig gesichert sind und durch unsachgemäße Handhabung leicht verstellt werden können.

### c) Ausführungsbeispiele

Ausführungsformen gemäß der Erfindung sind im Folgenden beispielhaft näher beschrieben. Es zeigen:
- Fig. 1:: einen Förderband-Wagen für das Flughafenvorfeld in perspektivischer Ansicht,
- Fig. 2 a - c:: das Fahrzeug der Figur 1 in unterschiedlichen Annäherungs-zuständen an ein Flugzeug in der Seitenansicht,
- Fig. 3:: den Förderband-Wagen gemäß den vorhergehenden Figuren in der Aufsicht,
- Fig. 4:: ein Geschwindigkeits-Abstands-Diagramm nach einer bekannten Vorgehensweise,
- Fig. 5:: ein Geschwindigkeits-Abstands-Diagramm nach der erfindungsgemäßen Vorgehensweise.

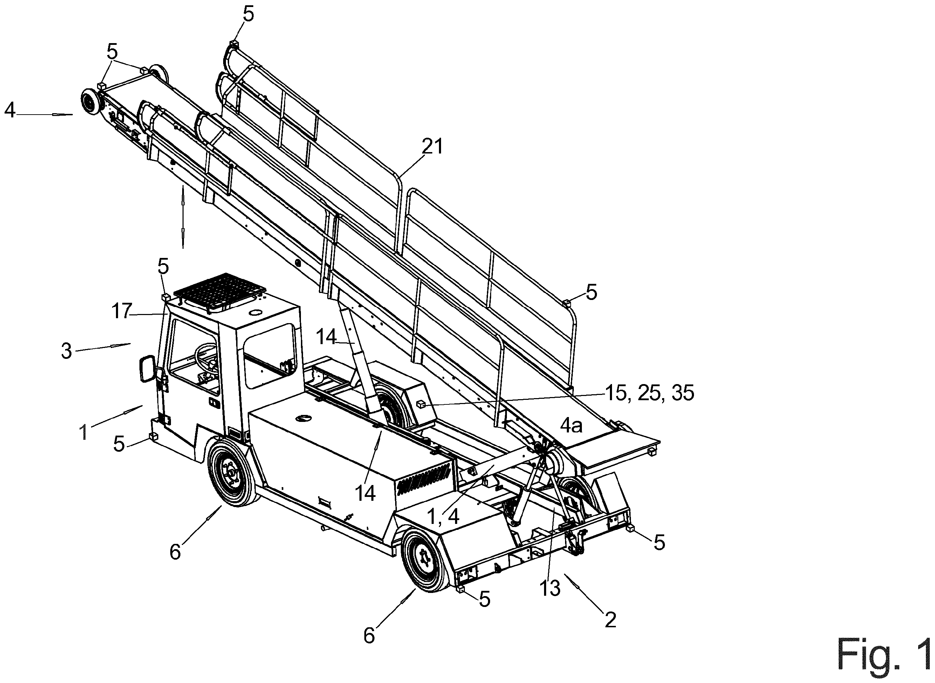

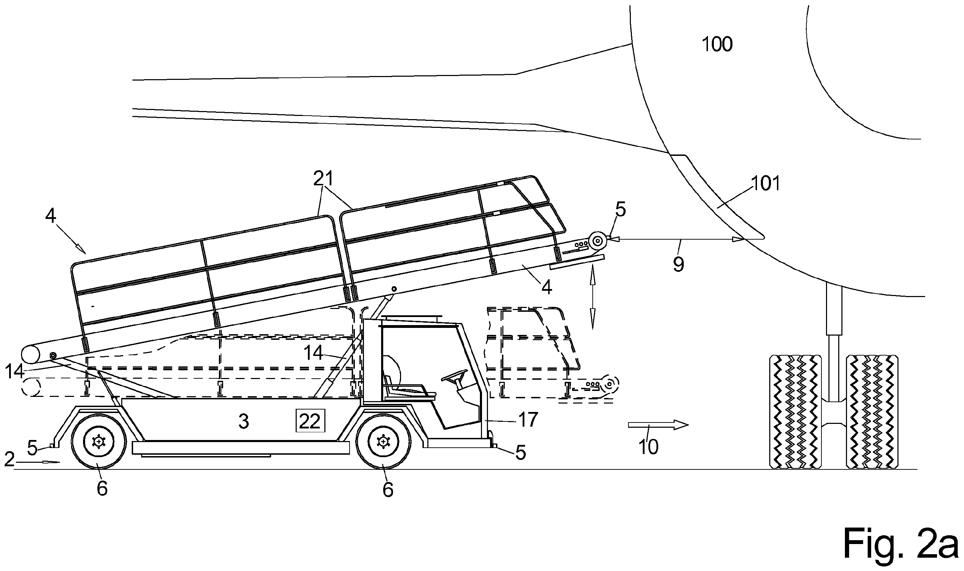

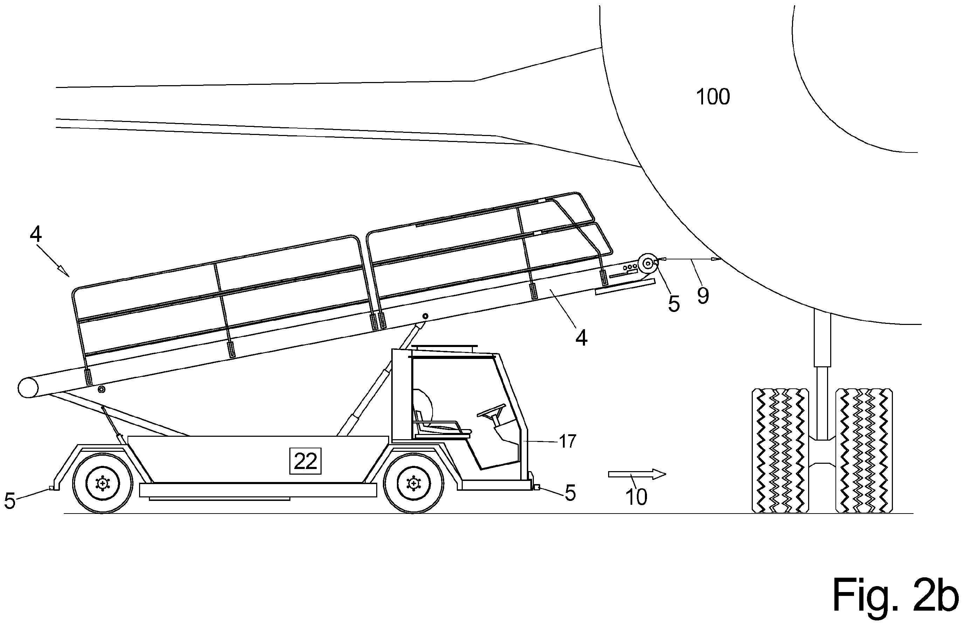

**Figur 1** zeigt einen bekannten Förderband-Wagen zum Be- und Entladen von Gepäck aus der Ladeluke 101 eines Flugzeuges 100 wie in den **Figuren 2a** - c dargestellt.

Zu diesem Zweck ist - wie am besten in **Figur** 1 zu erkennen - auf einem Chassis 2, welches in diesem Fall vier Räder 6 umfasst, von denen zwei über eine Lenkvorrichtung 7 lenkbar sind, ein Aufbau 3 aufgebaut, der auf der linken Seite im vorderen Bereich eine Fahrerkabine 17 aufweist, und daneben auf der rechten Seite eine Förderband-Einheit 4.

Die Förderband-Einheit 4 ist im Transportzustand (in **Figur 2a** mit gestrichelten Linien dargestellt) auf das Chassis 2 abgesenkt und kann mittels eines vorderen und eines hinteren Hydraulikzylinders 14 von dieser abgesenkten Transportstellung aus gesteuert angehoben werden in die mit durchgezogenen Linien gezeichnete Arbeitsstellung, insbesondere so, dass das vordere Ende der Förderbandeinheit 4 - welches auch im abgesenkten Transportzustand meist bereits über das vordere Ende des übrigen Förderband-Wagens 1 vorsteht - höher angehoben wird als das hintere Ende, welches annähernd auf Ausgangsniveau bleibt.

Die beidseits des in der Förderbandeinheit 4 umlaufenden Förderbandes 4a von den Seitenkanten der Förderbandeinheit 4 nach oben aufragenden Seitengitter 21 werden dabei in aller Regel mit bewegt, können bei manchen Bauformen jedoch für den Transportzustand näher an die Förderbandeinheit 4 heran geklappt werden.

Wie die **Figuren 2a** **- c** zeigen, besteht das Ziel darin, das in Fahrtrichtung 10 vordere Ende der Förderband-Einheit 4 auf eine Höhe entsprechend der Höhe der Unterkante der Ladeluke 101 anzuheben, während das hintere Ende auf oder oberhalb der Höhe des Ladebodens eines Gepäckwagens 102 endet.

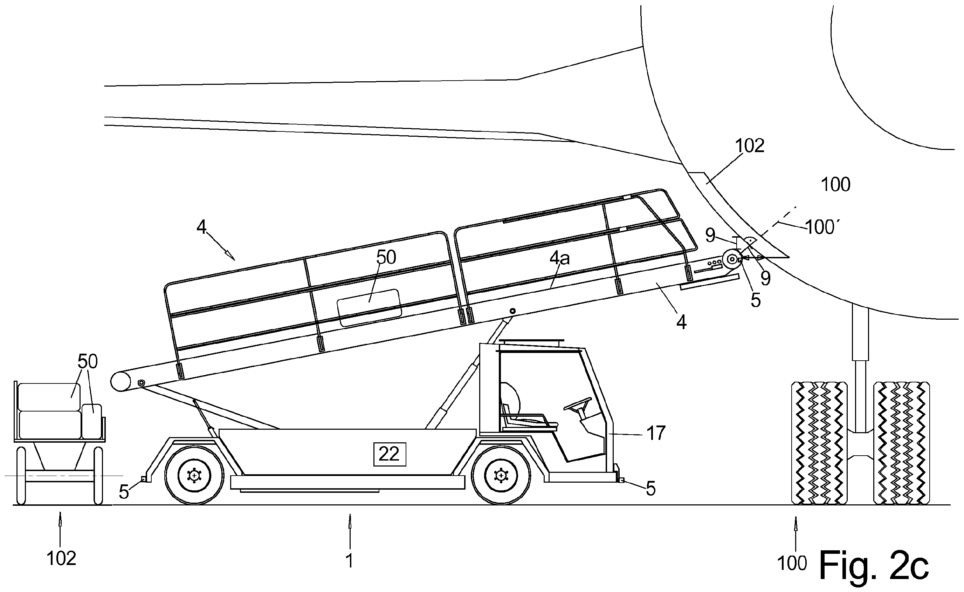

Zum Entladen eines Flugzeuges 100 wird die Oberseite des Förderbandes 4a an dessen vorderem Ende auf eine Höhe knapp unterhalb der Unterkante der Ladeluke 101 eingestellt, sodass der dort stehende Bediener die Gepäckstücke 50 mit möglichst geringem Kraftaufwand lediglich durch Hinausschieben aus der Ladeluke auf das Förderband 4a verbringen kann, welches diese zum hinteren Ende nach unten transportiert, wo sie in den Gepäckwagen 102 hineinfallen, wie in **Figur 2c** dargestellt, oder vom hinteren Ende abgenommen werden.

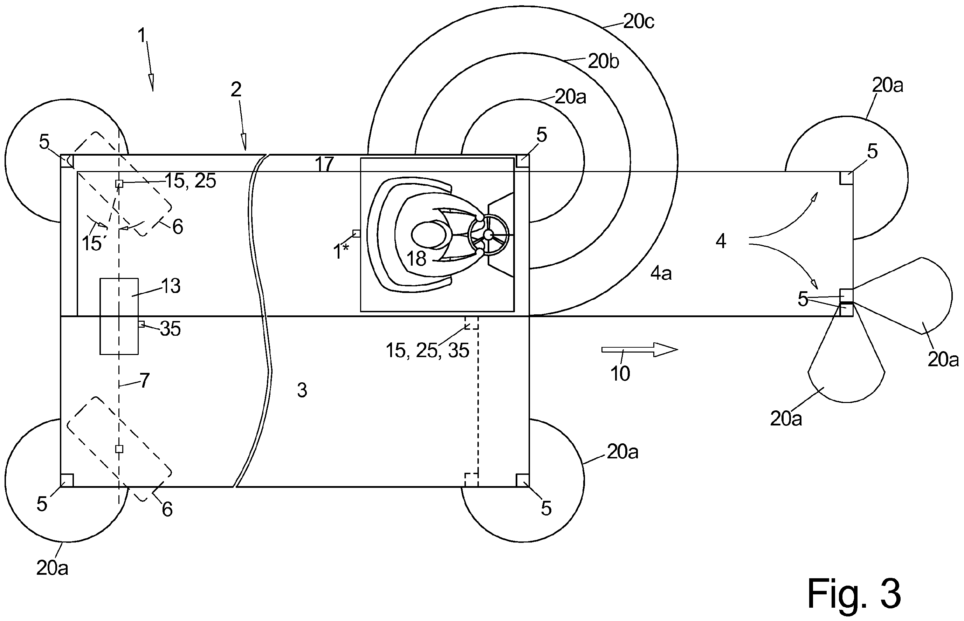

Wie **Figur** 3 zeigt, sind bei diesem Förderband-Wagen 1 die Hinterräder 6 des Förderband-Wagens 1 lenkbar.

Das Chassis 2 des Förderband-Wagens 1 umfasst also einen Fahrantrieb 13 zum Antreiben der Räder 6, meist nur der Räder 6 einer Achse, in diesem Fall der Hinterachse, sowie eine Lenkvorrichtung 7, um die lenkbaren Räder 6 zu lenken.

Darüber hinaus besitzt der Förderband-Wagen 1 auch einen Bewegungsantrieb 14, mit dem die Bewegungen der beweglichen Komponenten, in diesem Fall nur der Förderband-Einheit 4, durch Heben und Senken separat im vorderen und hinteren Bereich, bewirkt wird, welches in diesem Fall eine jeweils separate Hydraulik-Pumpe 22 oder eine gemeinsame Hydraulik-Pumpe 22 zum Anheben der beiden Hydraulikzylinder 14 ist.

Bekannt ist es ebenfalls bereits, zumindest an dem beweglichen Element, der Förderband-Einheit 4, zumindest an deren vorderem Ende ein oder mehrere Abstands-Sensoren 5 anzuordnen, und gegebenenfalls auch an weiteren Stellen des Fahrzeuges, wie beispielsweise in **Figur 1** dargestellt, nämlich an den Ecken des Chassis 2 und des Aufbaus 3, in dessen unteren Bereich als auch im oberen Bereich, insbesondere an den beiden vorderen oberen Ecken der Fahrerkabine 17, die im abgesenkten Transportzustand der Förderband-Einheit 4 die höchsten Punkte des Förderband-Wagens 1 darstellen und ebenfalls beim z.B. Unterfahren eines Flügels oder Triebwerkes des Flugzeuges 100 - was offiziell untersagt ist - mit diesem kollidieren könnte.

Auch am hinteren Ende der Förderband-Einheit 4 sind vorzugsweise ein oder mehrere Abstand-Sensoren 5 angeordnet und/oder auch am vorderen und/oder hinteren Ende, insbesondere in dessen obersten Bereich, den Seitengittern 21.

Die **Figuren 2a** **- c** zeigen, wie sich das in der Seitenansicht dargestellte Förderband-Fahrzeug 1 mit bereits angehobener Förderband-Einheit 4 auf das Flugzeug 100 zubewegt, und wie dabei der in der Horizontalen gemessene Abstand 9 vom vorderen Ende der Förderband-Einheit 4, also in der Regel der vorderen Umlenkrolle 23 des Förderbandes 4a - zur Außenhaut des Flugzeug-Rumpfes abnimmt, bis die in **Figur 2c** dargestellte Endlage erreicht ist, nämlich mit einem Minimal-Abstand 9, jedoch ohne Berührung von Förderband-Wagen 1 und Flugzeug 100.

Da der Fahrer 18 die exakte Höhe der Ladeluke 102 nicht kennt, wird er bei Beginn der Annäherung an das Flugzeug 100 die Förderband-Einheit 4 erst grob nach Augenmaß auf die richtige Höhe einstellen, und dies nachjustieren während der Annäherung, da er das Erreichen der richtigen Höhe des vorderen Endes der Förderband-Einheit 4 immer besser erkennen kann, je näher sich diese am Flugzeug 100 befindet, was der Fahrer 18 von schräg unten aus der Fahrerkabine 17 abschätzen oder erkennen kann.

Teilweise besitzen die Förderband-Wagen 1 zur besseren Einsichtnahme in die Annäherungssituation auch eine gegenüber dem Chassis 2 ebenfalls mittels Hydraulikzylinder anhebbare Fahrerkabine 17, die unabhängig von der Förderband-Einheit 4 anhebbar ist oder zusammen mit dieser anhebbar ist.

**Figur 2c** lässt ferner auch erkennen, dass bei einem geringen restlichen Abstand 9 nicht nur der Abstand in horizontaler, sondern auch in vertikaler und vor allem in schräg nach oben lotrecht zur Außenhaut des Flugzeuges 100 an dieser Stelle gemessenen Richtung von Bedeutung ist, denn in dieser Lotrechten 100' zur Flugzeug-Außenhaut ist der verbliebene Abstand 9 am geringsten.

Vorzugsweise wird daher von der Warnvorrichtung der Abstand in Richtung dieser Lotrechten 100' bestimmt, insbesondere durch Berechnen aus den von den Sensoren erhalten Signalen.

Der Fahrer 18 des Förderband-Wagens 1 wird ferner bei der Annäherung auch durch Lenken das vordere Ende der Förderband-Einheit 4 in Querrichtung möglichst genau zur Ladeluke 102, also deren Mitte, einstellen, und zu diesem Zweck unter Umständen nicht exakt gerade auf das Flugzeug 100 zufahren.

Die Höhe des vorderen Endes der Förderband-Einheit 4 wird wie erläutert für das Entladen des Flugzeuges 100 etwas niedriger als die Unterkante der Ladeluke 102 dargestellt, für das Beladen dagegen höher eingestellt, sodass vorzugsweise das vordere Ende der Förderband-Einheit 4 sogar durch die Ladeluke 102 ins Innere des Flugzeugs 100 hinein vorgefahren werden kann, und im Inneren des Flugzeugs 100 die auf dem Förderband 4a nach oben geförderten Gepäckstücke 50 in den Laderaum des Flugzeuges 100 fallen.

Auch dabei kann es zu Kollisionen mit dem Flugzeug 100 kommen, sei es mit der Ladeluke 102 oder sei es zwischen der Unterseite der Förderband-Einheit 4 und der Unterkante 102a der Ladeluke 102.

Um dies zu vermeiden, ist zum einen das Förderband-Fahrzeug 1 vorzugsweise
- mit relativ vielen Abstandssensoren 5 wie vorbeschrieben ausgestattet und
- vorzugsweise darüber hinaus mit weiteren Sensoren, wie am besten anhand **Figur 3** zu erkennen.

Wie die Figuren **2a** **- c** zeigen, ist bei der Annäherung der am vorderen Ende angehobenen Förderband-Einheit 4 an das Flugzeug 100 anfangs, also bei noch relativ großem Abstand, primär der Abstand 9 vom Flugzeug 100 in horizontaler Richtung vom vorderen Ende, also dem in Fahrtrichtung 10 in der Seitenansicht vordersten Punkt, der Förderband-Einheit 4 relevant.

Erst wenn in dieser Richtung der Abstand 9 zum Flugzeug nach oben nicht kleiner als das 5-fache, besser kleiner als das 3-fache, besser kleiner als das 2-fache des horizontalen Abstandes 9 kann - für den Fall, dass zusätzlich zur horizontalen Annäherung auch die Höhe des vorderen Endes der Förderband-Einheit 4 verstellt wird - auch die vertikale Komponente der Annäherung an das Flugzeug 100 berücksichtigt werden. Dann wird vorzugsweise als Abstand 9 derjenige Abstand 9 genommen, der entlang der Lotrechten 100' zur Tangente an den im Querschnitt konvex gebogenen Flugzeugrumpf gemessen ist und zwar an einem solchem Punkt des Querschnittes des Flugzeugrumpfes, dass dann der Abstand 9 zum vorderen Ende der Förderband-Einheit 4 den geringsten Wert einnimmt.

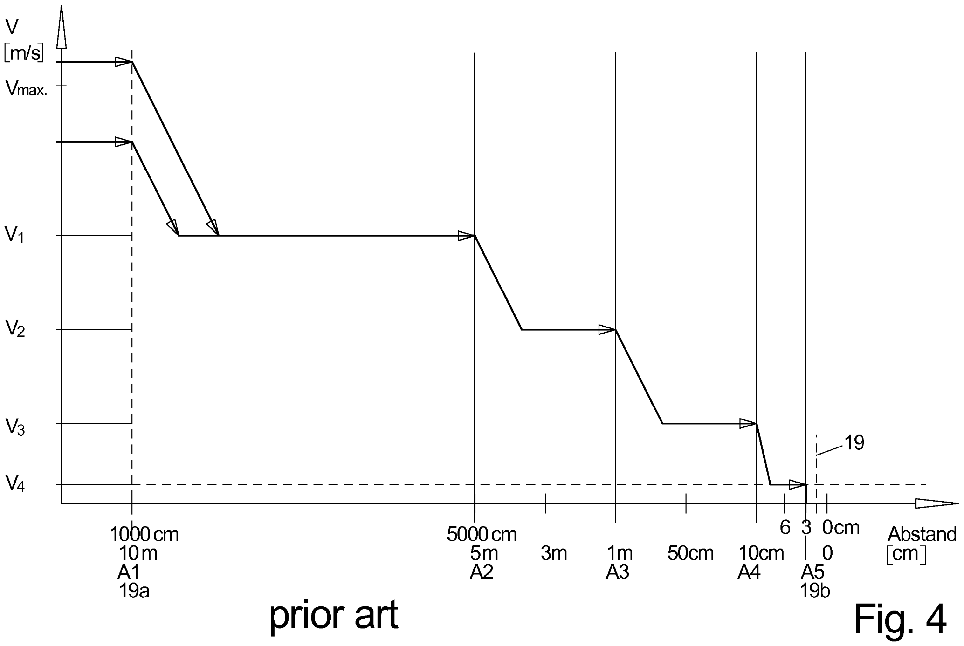

**Fig. 4** zeigt den Fall, wie bisher die Annäherungs-Geschwindigkeit v des Förderband-Fahrzeuges an das Flugzeug in Abhängigkeit von dem momentanen Abstand 9 gesteuert wurde:

In den meisten Fällen existiert auf dem Vorfeld eines Flughafens für alle dort fahrenden Fahrzeuge 1 eine - eventuell je nach Fahrzeugtyp unterschiedliche - Höchstgeschwindigkeit v-max.

Doch selbst wenn das Förderband-Fahrzeug 1 mit einer höheren Geschwindigkeit, insbesondere seines Fahrantriebes 13, heranfährt, wird es bei einem ersten Abstands-Grenzwert A1, dem Reduzierungs-Abstand 19a, von beispielsweise 10m, auf eine erste Geschwindigkeit v1 automatisch abgebremst und mit dieser Geschwindigkeit v1 unverändert weitergefahren bis zu einem zweiten Abstands-Grenzwert A2 von beispielsweise 5m.

Dann wird wiederum die Geschwindigkeit reduziert auf einen zweiten Wert v2, und so wird die Geschwindigkeit in der Regel in mindestens zwei Stufen bei bestimmten Abstands-Werten z.B. A3, A4, A5 reduziert auf zuletzt eine Geschwindigkeit v4, die nur noch einen Zentimeter pro Sekunde oder sogar weniger beträgt.

Bei einem Erreichen eines Stopp-Abstandes 19b, hier z.B. A5 = 3cm, der nur noch wenig grösser ist als der Mindest-Abstand 19, wird dann der Fahrantrieb des Förderband-Wagens gestoppt und spätestens jetzt auch der Antrieb für die Bewegungsgeschwindigkeit eines beweglichen Teils des Vorfeld-Fahrzeuges.

Aus diesem Diagramm ist ersichtlich, dass beispielsweise zwischen dem ersten Abstandswert A1 bei 10m und dem zweiten Abstandswert A2 bei 5m mit einer Geschwindigkeit v1 gefahren wird, die auch für den zweiten Abstandswert A2 von 5m oder kurz davor noch als ausreichend niedrig erachtet wird, sodass man also im Bereich dazwischen durchaus hätte schneller fahren können und dadurch der ganze Annäherungsprozess beschleunigt würde. Das Gleiche gilt für alle anderen Reduzierungsstufen.

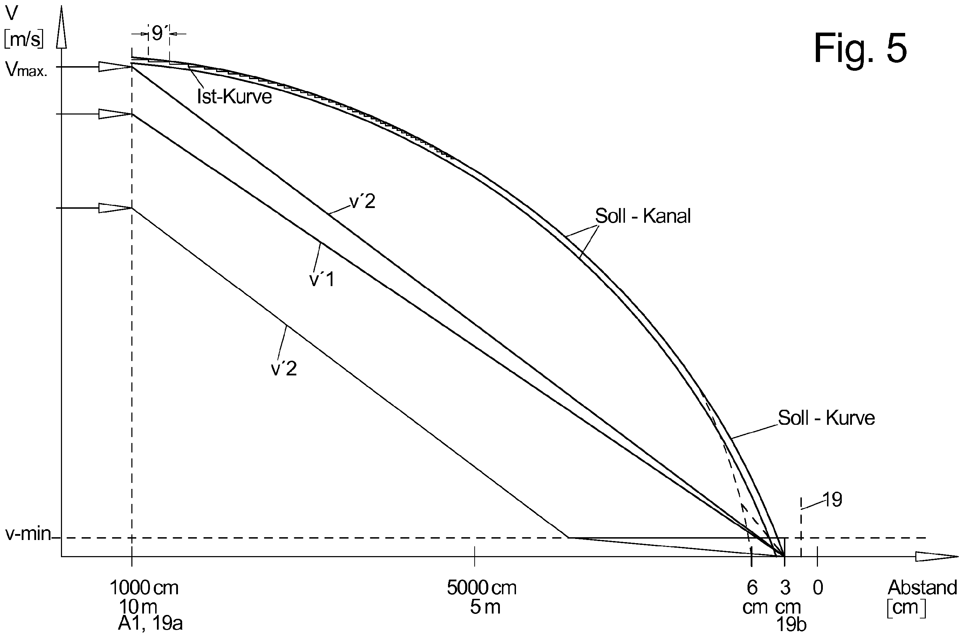

In **Fig. 5** ist die erfindungsgemäße Regelung der Geschwindigkeit beim Annähern dargestellt:
Egal mit welcher Geschwindigkeit das Förderband-Fahrzeug 1 den ersten Abstandswert A1, den Reduzierungs-Abstand 19a, von beispielsweise 10m erreicht, wird es von diesem ersten Abstandswert ab kontinuierlich abgebremst, also die Annäherungs-Geschwindigkeit v, insbesondere die Geschwindigkeit des Fahrantriebes 13, reduziert, mit dem Ziel, dass bei Erreichen des Soll-Abstandes von beispielsweise wiederum 3cm erst die Geschwindigkeit v auf Null reduziert wird.

Auch hier wird der Bewegungsantrieb 14 für ein bewegliches Teil des Vorfeld-Fahrzeuges 1, beispielsweise die Förderband-Einheit 4, spätestens jetzt auf Null reduziert.

### Hierfür existieren mehrere Möglichkeiten:

Entweder wird - in Kenntnis der Annäherungsgeschwindigkeit, insbesondere der Fahrgeschwindigkeit bei Erreichen des ersten Abstands-Wertes A1 von etwa beispielsweise 10m die Geschwindigkeit mit gleichbleibender Rate pro Zeiteinheit, also mit gleichbleibender negativer Beschleunigung v`1 oder v`2 so reduziert, dass diese beim Stopp-Abstand, etwa 3cm, v=0 erreicht. Dieses Verfahren fällt nicht unter die beanspruchte Erfindung.

Hierfür ist jedoch die Kenntnis der Geschwindigkeit v bei Erreichen des ersten Abstands-Wertes A1, bei dem die Reduzierung der Geschwindigkeit beginnt, notwendig.

Eine zweite, ebenfalls nicht unter die beanspruchte Erfindung fallende Möglichkeit besteht darin, unabhängig von der Geschwindigkeit bei Erreichen des ersten Abstands-Wertes A1 mit einer vorgegebenen negativen Beschleunigung z.B. v`2 abzubremsen, die ausreichend ist, um auch bei einer Geschwindigkeit v-max - als der höchsten zulässigen Geschwindigkeit für diesen Fahrzeugtyp auf dem Vorfeld oder technisch bedingten Maximal-Geschwindigkeit dieses Fahrzeuges - dazu führt, dass dann bei dem Soll-Abstand die Geschwindigkeit v Null wäre.

Wie an der untersten Kurve ersichtlich, führt dies jedoch dazu, dass beim Ankommen an dem ersten Abstandswert A1 mit einer deutlich unter v-max liegenden Geschwindigkeit bei Fortsetzung dieser negativen Beschleunigung z.B. v`2 bis zu v=0 dies erreicht wäre bei einem Abstands-Wert, der noch weit vom Soll-Abstandswert entfernt ist.

In diesem Fall kann nach mehreren, nicht beanspruchten Varianten weiterverfahren werden:
- entweder wird bei Erreichen eines minimalen Geschwindigkeitswertes v-min dieser beibehalten, bis zu einem Abstandswert kurz vor oder an dem Stopp-Abstand 19b (End-Abstand) und erst dann die Geschwindigkeit auf Null abgebremst,
- oder es wird ab Erreichen von v-min die Geschwindigkeit nun mit einer anderen negativen Beschleunigung, die aber jetzt wiederum gleich bleibt, abgebremst, die so gewählt ist, dass bei Erreichen des Stopp-Abstandes 19b die Geschwindigkeit wiederum Null ist.

Statt dieser Modelle, die im Wesentlichen zumindest abschnittsweise gleichbleibende Reduzierungsraten, also negative Beschleunigungen v', aufweisen, zeigt die oberste Kurve, wie trotz hoher Sicherheit mit einer optimalen, in diesem Fall nach rechts oben konvex gekrümmten, Geschwindigkeits-Abstands-Kurve das Förderband-Fahrzeug angenähert werden kann, sodass bei Erreichen des Endabstandes die Geschwindigkeit dennoch Null ist.

Bei dieser Kurve - die wiederum bei einem ersten Abstandswert A1, dem Reduzierung-Abstand 19a, von beispielsweise 10m beginnt- ist die negative Beschleunigung beim Abbremsen zunächst relativ gering und nimmt in diesem Fall immer mehr zu, wobei diese Soll-Kurve auch gerade Abschnitte enthalten kann.

Das Bestreben besteht darin, die Geschwindigkeit v bei jedem Abstand 9 so hoch wie möglich zu halten, ohne ein Sicherheitsrisiko einzugehen.

Die Kurve kann, abweichend von der Erfindung, jedoch auch anders aussehen - wie gestrichelt eingezeichnet - indem die negative Beschleunigung v' am Ende der Annäherungsbewegung wieder geringer wird, also die Kurve flacher wird, um bei dem sehr geringen Restabstand eine längere Reaktionszeit für die Steuerung 1* einschließlich der Sensorik zur Verfügung zu haben.

Die Soll-Kurve soll von der tatsächlichen Geschwindigkeit v, der Ist-Kurve, an keiner Stelle überschritten werden, aber die Annäherung von unten an diese Soll-Kurve durch die tatsächliche gefahrene Geschwindigkeit soll möglichst gut sein.

Dies kann man erfindungsgemäß erreichen, indem die Geschwindigkeit v jeweils so lange konstant gehalten wird, bis sie die Soll-Kurve erreicht, und dann um einen festen Stufenwert reduziert wird und so fort, und wobei lediglich dieser Stufenwert festgelegt werden muss.

Eine andere erfindungsgemäße Methode, um dies zu erreichen, besteht darin, dass ein Soll-Kanal, gebildet aus zwei im Abstand zueinander, vorzugsweise in einem gleichen Abstand zueinander, verlaufenden Soll-Kurven, also Geschwindigkeits-Abstands-Kurven, vorgegeben werden, und die Geschwindigkeit v so gesteuert wird, dass sie sich immer in diesem Soll-Kanal befindet.

Hierfür wird die Annäherung-Geschwindigkeit, insbesondere die Fahr-Geschwindigkeit, zunächst konstant gelassen, bis sie die obere Kurve erreicht hat, dann abgebremst, bis sie die untere Kurve erreicht und dann wieder konstant gelassen bis sie die obere Kurve erreicht.

Mit diesen Methoden kann die Annäherung eines Förderband-Wagens 1 an ein Flugzeug 100 sehr viel schneller als mit den bisherigen Annäherungsmethoden von statten gehen, was Betriebszeiten spart und letztendlich ungenutzte Totzeiten des teuren Flugzeuges 100, welches eine möglichst hohe Auslastung haben soll.

Fig. 3 zeigt in einer Aufsicht auf ein Förderband-Fahrzeug 1, wo solche Abstandssensoren 5 angebracht sein können:
Zum Einen natürlich an dem in Fahrtrichtung 10 vorderen Ende der Förderband-Einheit 4, vorzugsweise in dessen vorderen linken und rechten Ecken. Dies ist deshalb wichtig, da gemäß der eingezeichneten Pfeile sich das vordere Ende der Förderband-Einheit 4 nicht nur in gerader Fahrtrichtung 10 nach vorne sondern bei Kurvenfahrt auch schräg nach links vorne oder schräg nach rechts vorne bewegen kann.

Bei dem in Fahrtrichtung 10 linken vorderen Abstandssensor 5 ist dessen Wirkbereich 20a eingezeichnet, der in der Aufsicht betrachtet etwa kreisförmig ist und sich in diesem Fall über ein Segment von 270° erstreckt.

Am rechten vorderen Abstandssensor 5 ist erkennbar, dass die Abstandssensoren auch schmaler gerichtete Wirkbereiche 20a haben können, die dann in der Aufsicht und/oder in der Seitenansicht betrachtet meist - flächig oder dreidimensional - keulenförmig gestaltet sind, und deshalb an dieser Stelle zwei Abstandssensoren eingesetzt sind, von denen die Wirkrichtung des Wirkbereiches bei dem einen Abstandssensor 5 nach vorne und bei dem anderen Abstandssensor 5 zur Seite oder schräg nach vorne gerichtet ist.

Die Steuerung 1* ist natürlich in der Lage, die Signale von den einzelnen Sensoren separat abzufragen und damit die Messung jedes einzelnen Sensors zu analysieren und damit auch die Richtung der Annäherung beispielsweise des vorderen Endes der Förderband-Einheit 4 an das Flugzeug 100 erkennen.

Weitere Abstandssensoren 5 sind vorzugsweise an den Ecken des in der Aufsicht etwa rechteckigen Aufbaus 3 des Förderband-Fahrzeuges 1 vorhanden, vorzugsweise in dessen oberen Bereich, also vorzugsweise an den oberen Ecken auch der Fahrerkabine 17, die - bei in die Transportstellung abgesenkten Förderband-Einheit 4 - oft das am höchsten aufragende Teil des Aufbaus 3 ist. Jedoch können solche Abstandssensoren 5 auch an den untersten Ecken des Aufbaus 3 vorhanden sein, wie beispielsweise in **Fig. 1** **oder** **2a** eingezeichnet.

Da anhand der **Fig. 4** **und** **5** erläutert wurde, zu welchem Zweck auch die Annährungsgeschwindigkeit gemessen werden kann, verfügt der Fahrantrieb 13 für die angetriebenen Räder 6 - in diesem Fall die zusätzlich auch lenkbaren Hinterräder - über einen Geschwindigkeitssensor 35, sodass die Steuerung 1 * des Förderband-Wagens 1 jederzeit dessen Fahrgeschwindigkeit kennt.

Um auch die Fahrtrichtung, die nicht immer die Längsrichtung 10 des Fahrzeuges 1 sein muss, zu kennen, ist an der Lenkvorrichtung 7, von der die lenkbaren Räder 6 gelenkt werden, ein Winkelsensor 15 vorhanden, der den Lenkeinschlag 8 in Form des von der Geradeaus-Stellung des Rades 6 abweichenden Winkel 15' misst.

Optional ist auch an dem Bewegungsantrieb 14 für die bewegliche Förderband-Einheit 4 - die also den Grundkörper bewegt und nicht das Förderband 4a in Umlaufrichtung antreibt - bestehend hier aus zwei Hydraulikzylindern 14 und mindestens einer zugehörigen Hydraulikpumpe 22, ein Winkelsensor 15 vorhanden, der die momentane Ausfahrstellung und/oder Winkelstellung des Hydraulikzylinders 14 zur Vertikalen oder Horizontalen misst, sowie gegebenenfalls auch ein Geschwindigkeitssensor 35, der die Ausfahr- oder Einfahrgeschwindigkeit des Hydraulikzylinders 14 misst. Ein Richtungssensor 25 detektiert die Richtung der Bewegung, also Ausfahr- oder Einfahrrichtung des Hydraulikzylinders 14.

Mit diesen Angaben ist die Steuerung 1* in der Lage, die Richtung und Geschwindigkeit, mit der sich vorzugsweise das kritische vordere Ende der Förderband-Einheit 4 relativ zum Chassis 2 des Förderband-Wagens 1 bewegt, zu errechnen.

Denn die Annäherungsgeschwindigkeit eines bestimmten Punktes der Förderband-Einheit 4 kann sich zusammensetzen aus der Fahrgeschwindigkeit des Fahrantriebes 14 des Förderband-Wagens 1 und / oder der Bewegungsgeschwindigkeit der Förderband-Einheit 4 oder eines anderen beweglichen Aufbau-Elementes des Förderband-Wagens 1 relativ zu dessen Chassis 2.

Etwas komplizierter als bisher dargestellt wird die Steuerung 1* der Annäherung, wenn - für das Beladen des Flugzeuges 100 mit Gepäckstücken 50 - die Förderband-Einheit 4 mit ihrem vorderen Ende durch die Laderaum-Luke 102 in den dahinter liegenden Laderaum hineinragen soll, denn dann sind zum einen Abstand-Sensoren 5 auch an den Seiten der Förderband-Einheit 4 in deren vorderen Bereich notwendig, die zur Seite nach außen gerichtet sind, um den Abstand der Förderband-Einheit 4 zu den seitlichen Wangen der Ladeluke 101 zu detektieren, und bei der Auswertung spielt die Winkelstellung der Verlaufsrichtung der Förderbandeinheit 4 zur Außenhaut des Flugzeuges 100 eine größere Rolle als bei einem im Abstand vor der Außenhaut endenden Förderband-Einheit 4.

### BEZUGSZEICHENLISTE

- 1: Vorfeld-Fahrzeug, Förderband-Wagen
- 1*: Steuerung
- 2: Chassis
- 3: Aufbau
- 4: bewegliches Aufbauelement, Förderband-Einheit, Ladeplattform
- 4a: Förderband
- 5: Abstands-Sensor
- 6: Rad
- 7: Lenkvorrichtung
- 8: Lenkeinschlag
- 9: Abstand
- 9`: Abstands-Bereich
- 10: gerade Fahrtrichtung
- 11: Querrichtung
- 12: Lotrechte, Vertikale
- 13: Fahr-Antrieb
- 14: Bewegungs-Antrieb, Hydraulikzylinder
- 15: Winkel-Sensor
- 15': Winkel
- 16: Schaltleiste, Bumper
- 17: Fahrerkabine
- 18: Fahrer
- 19: Mindest-Abstand
- 19a: Reduzierung-Abstand
- 19b: Stopp-Abstand
- 20: Winkelbereich
- 21: Seitengitter
- 22: Hydraulik-Pumpe
- 23: Umlenkrolle
- 25: Richtungs-Sensor
- 35: Geschwindigkeits-Sensor
- 50: Gepäckstück
- 100: Gegenstand, Flugzeug
- 100': Lotrechte zu Flugzeug-Außenhaut
- 101: Ladeluke
- 200: Gepäckwagen

- A: Abstand
- v: gemessene Geschwindigkeit

## Patentansprüche

1. **Verfahren** zum Steuern der Bewegung eines Vorfeld-Fahrzeuges (1) beim Annähern an ein Flugzeug (100) indem
a) der Abstand (9) des Vorfeld-Fahrzeuges (100) zum Flugzeug ständig gemessen wird,
b) der gemessene Abstand (9) ständig mit einem Mindest-Abstand (19) verglichen wird,
c) bei Unterschreiten eines Reduzierungs-Abstandes (19a) die Annäherungsgeschwindigkeit (v) des Vorfeld-Fahrzeuges (100) auf eine vorgegebene Geschwindigkeit (v1, v2) abgebremst wird.
d) Schritt c) gegebenenfalls mehrfach wiederholt wird,
e) bei Unterschreiten eines Stopp-Abstandes (19b) die Annäherungsgeschwindigkeit (v) des Vorfeld-Fahrzeuges (100) auf Null reduziert wird,
f) als Schritt c*) die Annäherungsgeschwindigkeit (v) des Vorfeld-Fahrzeuges (100) kontinuierlich abgebremst wird,
wobei weiter
- die Annäherungsgeschwindigkeit (v) ständig gemessen wird, **dadurch gekennzeichnet, dass**
- die gemessene Annäherungsgeschwindigkeit (v) ständig mit einer Soll-Kurve verglichen wird, die eine maximale Geschwindigkeit als Funktion des Abstands (9) festlegt,
- im Schritt c) die Annäherungsgeschwindigkeit (v) so abgebremst wird, dass sie die Soll-Kurve nicht übersteigt, wobei
- die Soll-Kurve beim Reduzierungs-Abstand beginnt, wonach die negative Beschleunigung beim Abbremsen zunächst relativ gering ist und immer mehr zunimmt, und wobei diese Soll-Kurve auch gerade Abschnitte enthalten kann,
- im Schritt c) die Annäherungsgeschwindigkeit (v) jeweils so lange konstant gehalten wird, bis sie die Soll-Kurve erreicht, und die Annäherungsgeschwindigkeit (v) dann um einen festgelegten Stufenwert reduziert wird; oder
- im Schritt c) die Annäherungsgeschwindigkeit (v) so gesteuert wird, dass sie sich immer in einem vorgegebenen Soll-Kanal befindet, wobei der Soll-Kanal aus der Soll-Kurve als oberer Soll-Kurve und einer im Abstand zu dieser verlaufenden weiteren Kurve für die Geschwindigkeit als Funktion des Abstands als unterer Soll-Kurve gebildet ist, indem wiederholt die folgenden zwei Schritte i) und ii) nacheinander durchgeführt werden:
i) zunächst wird die Annäherungsgeschwindigkeit (v) konstant gehalten, bis sie die obere Soll-Kurve erreicht hat,
ii) und dann wird abgebremst, bis die Annäherungsgeschwindigkeit (v) die untere Soll-Kurve erreicht,
- wobei vor der Durchführung des Schritts c*) einfach oder mehrfach die Schritte a) bis c) durchgeführt werden.

2. Verfahren nach Anspruch 1,
**dadurch gekennzeichnet, dass**
das kontinuierliche Abbremsen mit einer konstanten negativen Beschleunigung (v') erfolgt.

3. Verfahren nach einem der vorhergehenden Ansprüche,
**dadurch gekennzeichnet, dass**
vor dem kontinuierlichen Reduzieren der Annäherungsgeschwindigkeit (v) ein oder mehrfach die Annäherungsgeschwindigkeit(v) auf eine vorgegebene Geschwindigkeit (v1, v2, v3) abgebremst wird.

4. Verfahren nach einem der vorhergehenden Ansprüche,
**dadurch gekennzeichnet, dass**
- die Art und/oder Richtung der Annäherungsgeschwindigkeit (v) ständig detektiert wird,
- abhängig von der Art und/oder Richtung der Annäherungsgeschwindigkeit (v)
- für den gleichen Abstand (9) oder Abstands-Bereich (9') unterschiedliche Soll-Kurven vorgegeben werden,
und/oder
- unterschiedliche Abstands-Geschwindigkeit-Profile vorgegeben werden
- wobei die Art der Annäherungsgeschwindigkeit (v) angibt:
- ob die Annäherung durch aktiven Fahrantrieb des gesamten Vorfeld-Fahrzeuges stattfindet,
- und/oder ob die Annäherung durch einen aktivierten Antrieb eines beweglichen Aufbau-Elementes stattfindet, und wenn es hiervon mehrere gibt, durch welches der mehreren beweglichen Aufbauelemente.

5. Verfahren nach einem der vorhergehenden Ansprüche,
**dadurch gekennzeichnet, dass**
bei
- Unterschreiten des mindestens einen Reduzierungs-Abstandes (19a) und/oder des Stop-Abstandes (19b)
und/oder
- bei Überschreiten der durch das Abstands-Geschwindigkeit-Profil vorgegebenen Geschwindigkeit
- ein Warnsignal abgegeben wird.

6. Verfahren nach einem der vorhergehenden Ansprüche,
**dadurch gekennzeichnet, dass**
- die Art und/oder Richtung der Annäherungsgeschwindigkeit (v) ständig detektiert wird,
- abhängig von der Art und/oder Richtung der Annäherungsgeschwindigkeit (v)
- die Richtung (10, 11,12), in der der Abstand (9) gemessen wird, variiert wird,
- wobei die Art der Annäherungsgeschwindigkeit (v) angibt:
- ob die Annäherung durch aktiven Fahrantrieb des gesamten Vorfeld-Fahrzeuges stattfindet,
- und/oder ob die Annäherung durch den aktivierten Antrieb eines beweglichen Aufbau-Elementes stattfindet, und wenn es hiervon mehrere gibt, durch welches der mehreren beweglichen Aufbauelemente.

7. Verfahren nach einem der vorhergehenden Ansprüche,
**dadurch gekennzeichnet, dass**
- der Winkel (15') und die Richtung des Lenkeinschlages ständig detektiert wird,
- abhängig von dem Winkel und der Richtung der Lenkeinschlages (8)
- die Richtung, in der der Abstand (9) gemessen wird, variiert wird.

8. Vorfeld-Fahrzeug (1) mit einer Steuerung (1*) für mindestens eine seiner Bewegungen, insbesondere seine Fahrbewegung, mit
- einem Chassis (2),
- einem auf dem Chassis (2) montierten Aufbau (3),
- wobei das Fahrzeug (1) mit kontinuierlich messfähigen Abstands-Sensoren (5) zur Messung des Abstandes (9) gegenüber Gegenständen (100) in der Umgebung des Fahrzeuges (1) ausgestattet ist,
**dadurch gekennzeichnet, dass**
- die Steuerung (1*) ausgelegt ist zur Durchführung des Verfahrens nach einem der vorhergehenden Ansprüche.

9. Vorfeld-Fahrzeug nach Anspruch 8,
**dadurch gekennzeichnet, dass**
- der Aufbau (3) relativ zum Chassis (2) bewegliche Aufbau-Elemente umfasst,
und/oder
- das Chassis (2) mit antreibbaren und lenkbaren Rädern (6) mit einer Lenkvorrichtung (7) ausgestattet ist.

10. Vorfeld-Fahrzeug nach Anspruch 9,
**dadurch gekennzeichnet, dass**
die Lenkvorrichtung (7) mit Winkel-Sensoren (15) und/oder Richtungs-Sensoren (25) zum Messen der Größe des Lenkeinschlages (8) sowie der Richtung (8a, b) des Lenkeinschlages (8) ausgestattet ist.

11. Vorfeld-Fahrzeug nach einem der Ansprüche 9 oder 10,
**dadurch gekennzeichnet, dass**
ein Fahr-Antrieb (13) des Chassis und/oder ein Bewegungs-Antrieb (14) der beweglichen Aufbau-Elemente (4) mit Geschwindigkeits-Sensoren (35) und/oder Richtungs-Sensoren (25) ausgestattet ist.

## Claims

1. Method for controlling the movement of an apron vehicle (1) while approaching an aircraft (100), by
a) continuously measuring a distance (9) of the apron vehicle (100) to the aircraft,
b) continuously comparing the measured distance (9) with a minimum distance (19),
c) when falling below a reduction distance (19a), decelerating the approach velocity (v) of the apron vehicle (100) to a predetermined velocity (v1, v2),
d) repeating step c) multiple times if applicable,
e) when falling below a stop distance (19b), reducing the approach velocity (v) of the apron vehicle (100) to zero,
f) as step c*) continuously decelerating the approach velocity (v) of the apron vehicle (100),
wherein further
- the approach velocity (v) is continuously measured,
**characterized in that**
- the measured approach velocity (v) is continuously compared to a target curve defining a maximum velocity as a function of the distance (9),
- in step c) the approach velocity (v) is decelerated such that it does not exceed the target curve,
wherein
- the target curve starts at the reduction distance, after which the negative acceleration during the deceleration at first is relatively small and successively increases, and wherein this target curve may also comprise straight sections,
- in step c) the approach velocity (v) is respectively held constant until it reaches the target curve, and then the approach velocity (v) is reduced by a set step value; or
- in step c) the approach velocity (v) is controlled such that it is always within a predetermined target range, wherein the target range is formed from the target curve as an upper target curve and a further curve proceeding in a distance therefrom for the velocity as a function of the distance as a lower target curve, by repeatedly performing the following two steps i) and ii) in succession:
i) at first, the approach velocity (v) is held constant until it reaches the upper target curve,
ii) then, a deceleration is performed, until the approach velocity (v) reaches the lower target curve,
- wherein before performing step c*), steps a) to c) are performed one or more times.

2. Method according to claim 1,
**characterized in that**
the continuous deceleration is performed with a constant negative acceleration (v').

3. Method according to any of the preceding claims,
**characterized in that**
before the continuous reduction of the approach velocity (v), the approach velocity (v) is decelerated to a predetermined velocity (v1, v2, v3) one or more times.

4. Method according to any of the preceding claims,
**characterized in that**
- the type and/or direction of the approach velocity (v) is continuously detected,
- depending from the type and/or direction of the approach velocity (v)
- for the same distance (9) or distance region (9') different target curves are set,
and/or
- different distance velocity profiles are set,
- wherein the type of approach velocity (v) defines
- whether the approach is performed by means of an active drive propulsion unit of the entire apron vehicle,
- and/or whether the approach is performed by means of an activated propulsion unit of a movable structure element, and if multiple of these exist, by means of which one among the multiple movable structure elements.

5. Method according to any of the preceding claims,
**characterized in that**
- when falling below the at least one reduction distance (19a) and/or the stop distance (19b)
and/or
- when exceeding the velocity predetermined by the distance velocity profile,
- a warning signal is issued.

6. Method according to any of the preceding claims,
**characterized in that**
- the type and/or direction of the approach velocity (v) is continuously detected,
- depending on the type and/or direction of the approach velocity (v)
- the direction (10, 11, 12) in which the distance (9) is measured is varied,
- wherein the type of approach velocity (v) defines
- whether the approach is performed by means of an active drive propulsion unit of the entire apron vehicle,
- and/or whether the approach is performed by means of an activated propulsion unit of a movable structure element, and if multiple of these exist, by means of which one among the multiple movable structure elements.

7. Method according to any of the preceding claims,
**characterized in that**
- the angle (15') and the direction of the steering operation is continuously detected,
- depending on the angle and direction of the steering operation (8)
- the angle in which the distance (9) is detected is varied.

8. Apron vehicle (1) with a control unit (1*) for at least one of its movements, in particular its driving movement, with
- a chassis (2),
- a structure (3) mounted to the chassis (2),
- wherein the vehicle (1) is provided with distance sensors (5) capable of continuously measuring, for measuring the distance (9) to objects (100) in the surroundings of the vehicle (1),
**characterized in that**
- the control unit (1*) is adapted for performing the method according to any of the preceding claims.

9. Apron vehicle according to claim 8,
**characterized in that**
- the structure (3) comprises structure elements which are movable relative to the chassis (2),
and/or
- the chassis (2) is provided with driveable and steerable wheels (6) with a steering device (7).

10. Apron vehicle according to claim 9,
**characterized in that**
the steering device (7) is provided with angle sensors (15) and/or direction sensors (25) for measuring the magnitude of the steering operation (8) as well as the direction (8a, b) of the steering operation (8).

11. Apron vehicle according to any of claims 9 or 10,
**characterized in that**
a drive propulsion unit (13) of the chassis and/or a movement propulsion unit (14) of the movable structure elements (4) is provided with velocity sensors (35) and/or direction sensors (25).

## Revendications

1. Procédé de commande du mouvement d'un véhicule d'aire de trafic (1) lors de l'approche d'un avion (100), consistant à :
a) mesurer en permanence la distance (9) du véhicule d'aire de trafic (100) par rapport à l'avion,
b) comparer en permanence la distance mesurée (9) à une distance minimale (19),
c) en cas de dépassement vers le bas d'une distance de réduction (19a), freiner la vitesse d'approche (v) du véhicule d'aire de trafic (100) jusqu'à une vitesse prédéfinie (v1, v2),
d) le cas échéant, répéter plusieurs fois l'étape c),
e) en cas de dépassement vers le bas d'une distance d'arrêt (19b), réduire à zéro la vitesse d'approche (v) du véhicule d'aire de trafic (100),
f) comme étape c*), freiner en continu la vitesse d'approche (v) du véhicule d'aire de trafic (100),
et consistant en outre à
- mesurer en permanence la vitesse d'approche (v),
**caractérisé en ce que**
- la vitesse d'approche (v) mesurée est comparée en permanence à une courbe de consigne qui définit une vitesse maximale comme fonction de la distance (9),
- à l'étape c), la vitesse d'approche (v) est freinée de manière à ne pas dépasser vers le haut la courbe de consigne,
sachant que
- la courbe de consigne commence à la distance de réduction, selon laquelle l'accélération négative est tout d'abord relativement faible lors du freinage et augmente alors de plus en plus, et cette courbe de consigne peut également inclure des parties rectilignes,
- à l'étape c), la vitesse d'approche (v) est maintenue constante jusqu'à ce qu'elle atteigne la courbe de consigne, et la vitesse d'approche (v) est alors réduite d'une valeur palier définie ; ou
- à l'étape c), la vitesse d'approche (v) est commandée de manière à se trouver toujours dans un canal de consigne prédéfini, le canal de consigne étant formé par la courbe de consigne en tant que courbe de consigne supérieure et par une autre courbe, s'étendant à distance de celle-ci, pour la vitesse en fonction de la distance, en tant que courbe de consigne inférieure, en exécutant de manière répétée les deux étapes suivantes i) et ii) l'une après l'autre :
i) tout d'abord, la vitesse d'approche (v) est maintenue constante jusqu'à ce qu'elle atteigne la courbe de consigne supérieure,
ii) puis on freine jusqu'à ce que la vitesse d'approche (v) atteigne la courbe de consigne inférieure,
- avant l'exécution de l'étape c*), les étapes a) à c) sont exécutées une ou plusieurs fois.

2. Procédé selon la revendication 1,
**caractérisé en ce que**
le freinage continu est effectué avec une accélération négative constante (v').

3. Procédé selon l'une des revendications précédentes,
**caractérisé en ce que**
avant la réduction continue de la vitesse d'approche (v), la vitesse d'approche (v) est freinée une ou plusieurs fois jusqu'à une vitesse prédéfinie (v1, v2, v3).

4. Procédé selon l'une des revendications précédentes,
**caractérisé en ce que**
- le type et/ou le sens de la vitesse d'approche (v) est détecté en permanence,
- en fonction du type et/ou du sens de la vitesse d'approche (v)
- on définit des courbes de consigne différentes pour la même distance (9) ou plage de distance (9'),
et/ou
- on définit des profils distance-vitesse différents,
- le type de la vitesse d'approche (v) indiquant :
- si l'approche se fait par un entraînement de circulation actif de l'ensemble du véhicule d'aire de trafic,
- et/ou si l'approche se fait par un entraînement activé d'un élément mobile de la superstructure, et s'il y en a plusieurs, par quel desdits plusieurs éléments mobiles de la superstructure.

5. Procédé selon l'une des revendications précédentes,
**caractérisé en ce que**
- en cas dépassement vers le bas de ladite au moins une distance de réduction (19a) et/ou de la distance d'arrêt (19b)
et/ou
- en cas de dépassement vers le haut de la vitesse prédéfinie par le profil distance-vitesse,
- un signal d'avertissement est émis.

6. Procédé selon l'une des revendications précédentes,
**caractérisé en ce que**
- le type et/ou le sens de la vitesse d'approche (v) est détecté en permanence,
- en fonction du type et/ou du sens de la vitesse d'approche (v)
- on fait varier le sens (10, 11, 12) dans lequel la distance (9) est mesurée,
- le type de la vitesse d'approche (v) indiquant :
- si l'approche se fait par un entraînement de circulation actif de l'ensemble du véhicule d'aire de trafic,
- et/ou si l'approche se fait par l'entraînement activé d'un élément mobile de la superstructure, et s'il y en a plusieurs, par quel desdits plusieurs éléments mobiles de la superstructure.

7. Procédé selon l'une des revendications précédentes,
**caractérisé en ce que**
- l'angle (15') et le sens du braquage sont détectés en permanence,
- en fonction de l'angle et du sens du braquage (8),
- on fait varier le sens dans lequel la distance (9) est mesurée.

8. Véhicule d'aire de trafic (1) comprenant une commande (1 *) pour au moins l'un de ses mouvements, en particulier son mouvement de circulation, et
- un châssis (2),
- une superstructure (3) montée sur le châssis (2),
- le véhicule (1) étant équipé de capteurs de distance (5) aptes à mesurer en continu, pour mesurer la distance (9) par rapport à des objets (100) dans l'environnement du véhicule (1),
**caractérisé en ce que**
- la commande (1*) est conçue pour mettre en oeuvre le procédé selon l'une des revendications précédentes.

9. Véhicule d'aire de trafic selon la revendication 8,
**caractérisé en ce que**
- la superstructure (3) comprend des éléments de superstructure mobiles par rapport au châssis (2),
et/ou
- le châssis (2) est équipé de roues (6) pouvant être entraînées et dirigées, comprenant un dispositif de direction (7).

10. Véhicule d'aire de trafic selon la revendication 9,
**caractérisé en ce que**
le dispositif de direction (7) est équipé de capteurs d'angle (15) et/ou de capteurs de sens (25) pour mesurer la valeur du braquage (8) ainsi que le sens (8a, b) du braquage (8).

11. Véhicule d'aire de trafic selon l'une des revendications 9 à 10,
**caractérisé en ce que**
un entraînement de circulation (13) du châssis et/ou un entraînement de mouvement (14) des éléments mobiles (4) de la superstructure est équipé de capteurs de vitesse (35) et/ou de capteurs de sens (25).
